(19) Europäisches Patentamt
European Patent Office
Office européen des brevets

(11) Publication number: **0 414 230 B1**

(12) **EUROPEAN PATENT SPECIFICATION**

(45) Date of publication of patent specification: **04.01.95**

(51) Int. Cl.[6]: **C09K 19/42**, C09K 19/46

(21) Application number: **90116101.8**

(22) Date of filing: **22.08.90**

(54) **Liquid crystal composition and liquid crystal device containing the same.**

(30) Priority: **23.08.89 JP 218112/89**

(43) Date of publication of application:
**27.02.91 Bulletin 91/09**

(45) Publication of the grant of the patent:
**04.01.95 Bulletin 95/01**

(84) Designated Contracting States:
**DE FR GB NL**

(56) References cited:
**EP-A- 0 272 115**
**EP-A- 0 298 702**
**EP-A- 0 360 043**
**GB-A- 2 198 743**

(73) Proprietor: **SHARP KABUSHIKI KAISHA**
**22-22 Nagaike-cho**
**Abeno-ku**
**Osaka (JP)**

Proprietor: **KANTO KAGAKU KABUSHIKI KAISHA**
**2-8, Nihonbashihoncho 3-chome**
**Chuo-ku**
**Tokyo 103 (JP)**

(72) Inventor: **Koden, Mitsuhiro, Reinbo-mansion Kawaramachi**
**401-go, 27-6, Nishikitsuji-cho**
**Nara-shi,**
**Nara-ken (JP)**
Inventor: **Kuratate, Tomoaki**
**18-11, 3-chome Torimi-cho**
**Nara-shi,**
**Nara-ken (JP)**
Inventor: **Shiomi, Makoto**
**Akatsuki-dormitory 567,**
**2613-1, Ichinomoto-cho**
**Tenri-shi,**
**Nara-ken (JP)**
Inventor: **Funada, Fumiaki**
**33-10, Izumihara-cho**
**Yamatokoriyama-shi,**
**Nara-ken (JP)**
Inventor: **Inoue, Hiromi**
**1328-2, Sezaki-cho**
**Soka-shi,**
**Saitama-ken (JP)**
Inventor: **Tsuchiya, Kazuhiko**
**19-18, Shimoshinozaki-cho**
**Edogawa-ku,**
**Tokyo (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

Inventor: **Sugiura, Atsushi**
**4-31-7, Shinkoiwa**
**Katsushika-ku,**
**Tokyo (JP)**
Inventor: **Fujii, Tsunenori**
**3231-7, Aoyagi-cho**
**Soka-shi,**
**Saitama-ken (JP)**

(74) Representative: **TER MEER - MÜLLER - STEINMEISTER & PARTNER**
**Mauerkircherstrasse 45**
**D-81679 München (DE)**

## Description

BACKGROUND OF THE INVENTION

1. Field of the Invention

The present invention relates to a ferroelectric liquid crystal composition and a ferroelectric liquid crystal device containing the same.

2. Description of the Related Art

Liquid crystal display devices most widely used at present are those utilizing nematic phase, but they have a drawback such that a display of large capacity such as of 1,000 X 1,000 lines is hard to realize. For example, in ordinary twisted nematic (TN) type liquid crystal display devices, contrast decreases as the number of lines increases, so that it is nearly impossible in practice to produce a display device of large capacity such as of 1,000 X 1,000 lines, with a good appearance.

In order to modify the drawback of the TN type liquid crystal display device, liquid crystal display devices of super twisted nematic (STN) type and double super twisted nematic (DSTN) type have been developed. However, they also have a drawback such that contrast and response speed decrease as the number of lines increases. Therefore, it is presently the utmost level that such display devices be provided with a display capacity of approximately 1,000 X 800 lines, by utilizing the upper-lower division driving method on a duty of 1/400.

On the other hand, there has been also developed a liquid crystal display device of active matrix type where thin film transistors (TFT) are arranged on a substrate, whereby a large capacity display of 1,000 X 1,000 lines and the like can be realized technically. However, the device has a drawback such that its production process takes a longer time with poor yield, leading to a very high production cost.

As a means to solve the problems described above, a ferroelectric liquid crystal display device, which is proposed as a liquid crystal display based on a principle different from the principle for the TN type display device, has been expected to be promising (see N. A. Clark, et al, Appl. Phys. Lett., 36, 899(1980)). In a such display device, a ferroelectric liquid crystal capable of exhibition chiral smectic C phase, chiral smectic I phase, etc. is utilized. Because the principle of the device is classified in a type utilizing memory characteristics, a larger display capacity may potentially be realized if response speed improves. Because the process does not require an active element such as thin film transistor, the cost for producing the liquid crystal device may not rise. Furthermore, the ferroelectric liquid crystal device has also a merit of a wide view angle, so that it is considered promising as an device for a display of a larger capacity of 1,000 X 1,000 lines or more.

The requirements for liquid crystal materials used in a ferroelectric liquid crystal device utilizing the smectic C phase aforementioned include the following items:

(1) exhibition of smectic C phase within a wide temperature range of which center is around room temperature;
(2) chemical stability;
(3) possessing large spontaneous polarization;
(4) lower viscosity;
(5) possessing phase sequences such as IAC (Isotropic-Smectic A-Smectic C) or INAC (Isotropic-Nematic-Smectic A -Smectic C);
(6) a long spiral pitch of nematic phase;
(7) a long pitch of smectic C phase;
(8) possessing a large tilt angle.

Items (3) and (4) are required in order to obtain high speed response necessary for realizing a large capacity display, while items (5), (6) and (7) are required in order to obtain good orientation and item (8) is needed in order to improve contrast and brightness in liquid crystal display.

However, it is impossible at present to satisfy all of such requirements with a single compound. Therefore, a plurality of compounds are mixed together and practically applied as a liquid crystal composition. For producing a ferroelectric liquid crystal composition, it is generally employed the process comprising adding an optically active compound capable of inducing a large degree of spontaneous polarization in a non-chiral liquid crystal compound or composition exhibiting smectic C phase. In the process there may be used sometimes an optically active compound with no characteristics as liquid crystal.

As the non-chiral compound or composition exhibiting smectic C phase, there may be used a liquid crystal composition comprising a mixture of several kinds of pyrimidine compounds [see Hiroyuki Onishi, Tsuyoshi Kamimura, Hisahide Wakita, Shuko Oniwa, Isao Ota, National Technical Report, 33(1), 35(1987)]. However, it is a disadvantage for such process that a sufficiently wide temperature range cannot be attained in smectic C phase if only a pyrimidine compound is used.

Thus, there has been used a process comprising preparing a liquid crystal composition with a wide temperature range of smectic C phase by using a pyrimidine compound and an ester compound, and adding an optically active compounds to the composition [see H. Inoue, A. Mizutome, S. Yoshihara, J. Kanbe, S. Iijima, International Display Research Conference, Post. Deadline Paper, (1988)]. On the other hand, some reports suggest that an ester compound is inferior to a pyrimidine compound, regarding response characteristics [see for example, Hiroyuki Onishi, Tsuyoshi Kamimura, Hisahide Wakita, Shuko Oniwa, Isao Ota, National Technical Report, 33(1), 35(1987)].

EP-A-0 298 702 relates to ferroelectric liquid crystal compositions comprising as liquid crystal components various pyrimidine compounds and compounds with phenyl ring systems always having a bridge between the phenyl ring systems. GB-A-2 198 743 relates to ferroelectric smectic liquid crystal mixtures containing at least one terphenyl which mixtures do not contain pyrimidine compounds. EP-A-0 272 115 discloses optically active liquid crystalline biphenyl compounds which are used as a main ingredient of a ferroelectric liquid crystal composition.

## SUMMARY OF THE INVENTION

It has been the problem underlying the present invention, to provide a ferroelectric liquid crystal composition and a ferroelectric liquid crystal device which are characterized by a wide operable temperature range, good orientation and high-speed response at room temperature.

According to the present invention, there is provided a ferroelectric liquid crystal composition, comprising at least one compound represented by the following general formula (I):

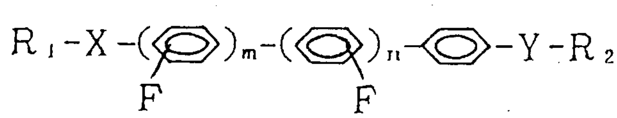

...... ( I )

[wherein $R_1$ and $R_2$ independently represent a straight chain alkyl group having 8 to 15 carbon atoms; X and Y independently represent a single bond, or a group of-O-, -COO-, or -OCO-; n and m independently represent 0 or 1 provided that at least one of n and m is 1] in a content of 1 to 40 % by weight and at least one compound represented by the following general formula (II):

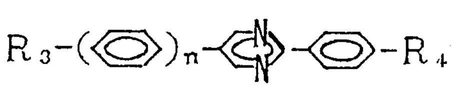

...... ( II )

[wherein $R_3$ and $R_4$ independently represent an alkyl group or an alkoxyl group, having 1 to 15 carbon atoms; and n represents 0 or 1] in a content of 99 to 60 % by weight, and further comprising an optically active compound.

Furthermore, the present invention provides a ferroelectric liquid crystal composition comprising the above ferroelectric liquid crystal composition and at least one compound represented by the following gerneral formula (III):

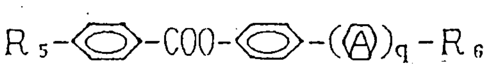

...... ( III )

[wherein

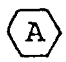 is 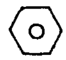 or 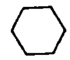 ,

$R_5$ and $R_6$ independently represent an alkyl group or an alkoxyl group, having 1 to 15 carbon atoms; q represents 0, 1 or 2], wherein the contents of the compounds represented by the formulae (I), (II) and (III) are 1 to 40 % by weight, 30 to 90 % by weight, and 3 to 30 % by weight, respectively.

The ferroelectric liquid crystal compositions of the present invention each stably exhibits a smectic C phase in a wider temperature range including room temperature, due to the compound represented by the general formula (I).

BRIEF DESCRIPTION OF THE DRAWINGS

Fig. 1 is a sectional view illustrating a constitution of a ferroelectric liquid crystal device utilizing a ferroelectric liquid crystal composition of the present invention.

Fig.2 is a plane view illustrating a constitution of a large-capacity ferroelectric liquid crystal device utilizing a ferroelectric liquid crystal composition of the present invention.

DETAILED DESCRIPTION OF THE PREFERRED EMBODIMENTS

The compound represented by the general formula (I) described above (referred to as Compound I hereinafter), which is used in the ferroelectric liquid crystal composition of the present invention, has not been disclosed in any literature. The compound has been produced by the present inventors.

In Compound I aforementioned, $R_1$ and $R_2$ independently represent a straight-chain alkyl group or alkoxyl group, having 8 to 15 carbon atoms; such an alkyl group includes octyl, nonyl, decyl, undecyl, or dodecyl.

In the Compound I , X and Y each represents a single bond or a group of -O-, -COO- or -OCO-; that is, when each of X and Y is a single bond, RX and RY independently represent an alkyl group; when each of X and Y is -O-, RX and RY independently represent an alkoxyl group; when each of X and Y is -COO-, RX and RY independently represent an acyloxy group; when each of X and Y is -OCO-, RX and RY independently represent an alkoxylcarbonyl group.

Preferably, the Compound I itself is a liquid crystal compound exhibiting a liquid crystal phase, in particular smectic A phase and/or smectic C phase. Specific examples of such compound include the following but they are not intended to limit the invention.

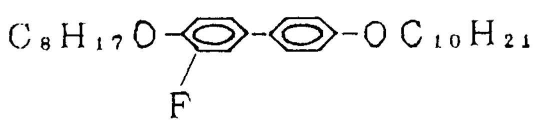 ( I 1 )

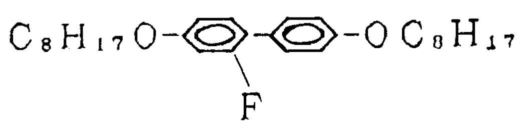 ( I 2 )

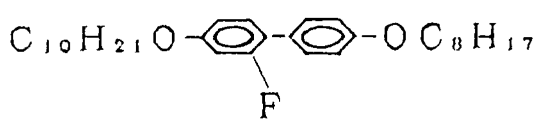 ( I 3 )

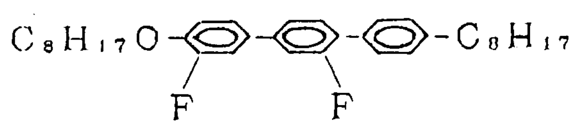 ( I 4 )

The compounds illustrated above may be used singly or in combination with two or more thereof.

A typical example of the process for producing Compound I aforementioned is now explained, illustrating a biphenyl compound, an example of the Compound I .

(A) There will now be described a compound having an alkoxyl group at side chains:

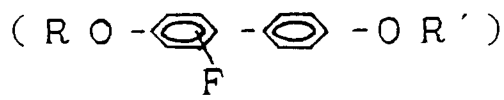

2-Fluorophenol as a starting material is treated with alkyl halide (RX) to obtain 2-fluoro-1-alkoxybenzene, which is then halogenated to produce 2-fluoro-4-halogeno-1-alkoxybenzene:

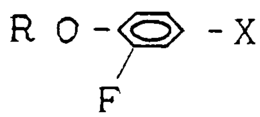

Grignard reaction of the 2-fluoro-4-halogeno-1-alkoxybenzene, thus produced, with a Grignard reagent

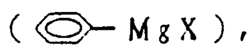

separately prepared, provides a biphenyl compound:

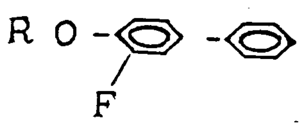

The biphenyl compound is subjected to Friedel-Craft reaction to be modified into an acylbiphenyl compound:

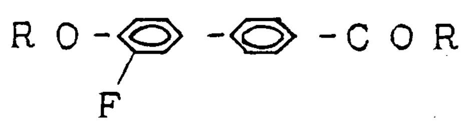

which is subsequently converted into a hydroxybiphenyl compound:

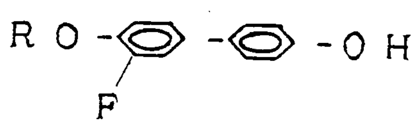

The hydroxybiphenyl converted is treated with alkyl halide (R'X) to obtain a dialkoxymonofluorobiphenyl compound:

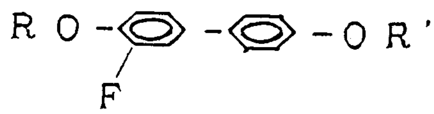

A desired product may be obtained, by selecting alkyl halide (RX, R'X), as R and R' at side chains.

(B) There will now be explained a compound having alkyl groups at side chains:

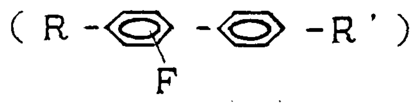

The compound may be synthesized as in the above synthetic process in association with those having alkoxyl groups at side chains, except that reduction is carried out following acylation by Friedel-Craft reaction and that alkylbenzene is used at preparation of a Grignard reagent.

(C) A compound having an alkoxyl group and an alkyl group at two side chains, separately, may be synthesized as in item (A) described above, except that selection is performed regarding whether reduction is carried out after acylation by Friedel-Craft reaction or alkylbenzene is used at preparation of Grignard reagent, to introduce an alkoxyl group or an alkyl group at an appropriate side chain thereof.

(D) An example of synthesizing triphenyl compounds belonging to Compound I is described below.

4-Bromo-2-fluorobiphenyl as a starting material is subjected to acylation by Friedel-Craft reaction to convert it into 4′-acyl-4-bromo-2-fluorobiphenyl, which is then converted into a 4′-hydroxybiphenyl compound. The 4′-hydroxybiphenyl compound is treated with alkyl halide (RX) to obtain a 4′-alkoxybiphenyl compound. On the other hand, a Grignard reagent having a benzene nucleus with a fluoro group and an alkoxyl group both being introduced thereinto:

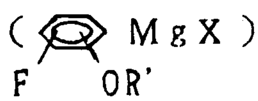

is prepared separately. The 4′-alkoxybiphenyl compound aforementioned along with the Grignard reagent thus ob tained is subjected to Grignard reaction to obtain a triphenyl compound, dialkoxydifluorotriphenyl compound:

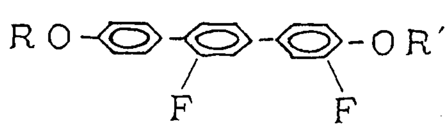

The alkyl group or alkoxyl group at the side chains may be selected in the same manner as described above. Furthermore, monofluorotriphenyl compound may be synthesized by using, as a starting material, either one of biphenyl compound and Grignard reagent, both without monofluoro group.

The principle of the process for producing Compound I is heretofore mentioned. The Examples described below may be referenced as specific examples of such production.

As the compound represented by the general formula (II) (referred to as a Compound II) and the compound III represented by the general formula (III) (referred to as Compound III), the corresponding liquid crystals known in the art may be used.

The alkyl group or an alkoxyl group of Compounds II and III are those, having 1 to 15 carbon atoms; such an alkyl group includes methyl, ethyl, propyl, i-propyl, butyl, 1- or 2-methylpropyl, t-butyl, pentyl, 1- or 2-methyl-butyl, hexyl, 1- or 3-methylpentyl, heptyl, 1- or 4-methylhexyl, octyl, 1-methylheptyl, nonyl, 1 - or 6-methyloctyl, decyl, 1-methylnonyl, undecyl, 1-methyldecyl, dodecyl, 1-methylundecyl. These alkyl groups may contain asymmetric carbons in the carbon chains thereof.

Specific examples of Compound II include the following, but they are not limited to the following.

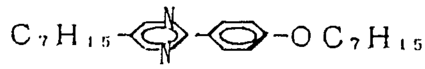
($II_1$)

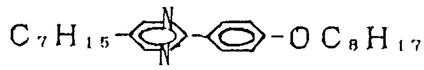
($II_2$)

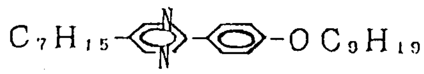
($II_3$)

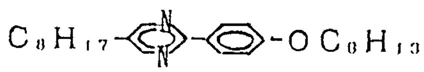
($II_4$)

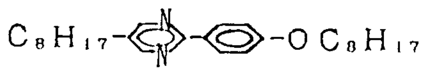
($II_5$)

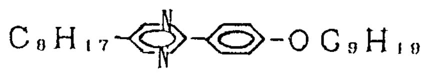
($II_6$)

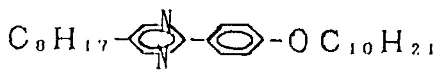
($II_7$)

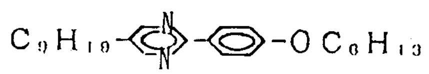
($II_8$)

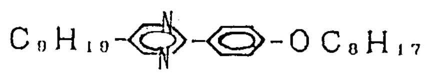
($II_9$)

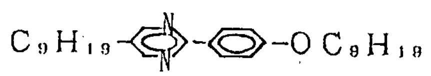
($II_{10}$)

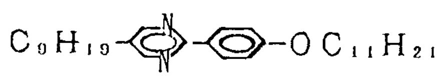
($II_{11}$)

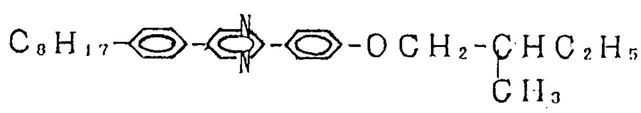
($II_{12}$)

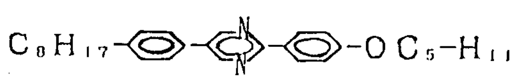
($II_{13}$)

The compound II described above may be used singly or in combination with two or more thereof.

Specific examples of Compound III include the following, but they are not limited to the following.

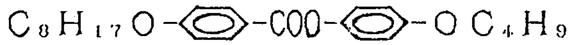
(III$_1$)

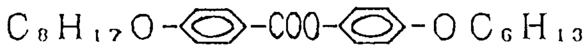
(III$_2$)

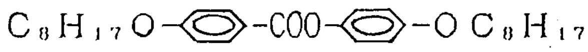
(III$_3$)

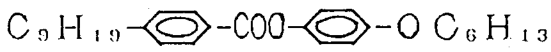
(III$_4$)

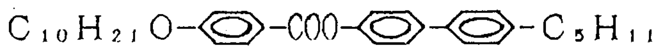
(III$_5$)

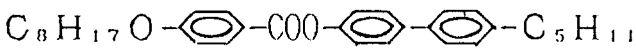
(III$_6$)

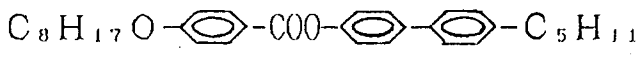
(III$_7$)

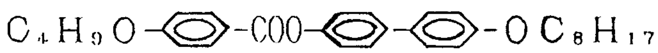
(III$_8$)

The compound III described above may be used singly or in combination with two or more thereof.

The ferroelectric liquid crystal composition of the present invention may be prepared, by containing at least one kind of Compound I and at least one kind of Compound II (referred to as Liquid Crystal Composition 1 hereinafter). In view of enlargement of the range of liquid crystal phase and stability thereof at room temperature, the content of Compound I described above in the Liquid Crystal Composition 1 is appropriately 1 to 40% by weight, and preferably 5 to 20% by weight. In this case, the content of Compound II is appropriately 60 to 99% by weight, and preferably 80 to 95% by weight.

A product prepared by allowing Liquid Crystal Composition 1 to contain at least one of Compound III (referred to as Liquid Crystal Composition 2 hereinafter) is also included in the ferroelectric liquid crystal composition of the present invention. In Liquid Crystal Composition 2, the content of Compound I described above may be appropriately 1 to 40% by weight, and preferably 5 to 20% by weight. In this case, the contents of Compounds II and III may be appropriately 30 to 90% by weight and 3 to 30% by weight, respectively. Preferably, the contents of Compounds II and III are 65 to 90% by weight and 5 to 15% by weight, respectively.

The present invention provides a ferroelectric liquid crystal composition, constituted by allowing aforementioned Liquid Crystal Composition 1 or 2, to contain at least one optically active compound. Any optically active compound containing carbons within its molecule may be used principally, but it is preferable to use one in a similar structure to the structure of a liquid crystal compound to be mixed with.

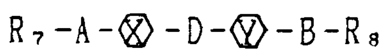
(IV)

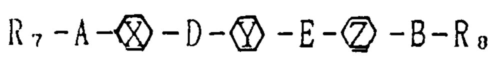
(V)

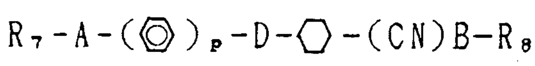
(VI)

[wherein A and B independently represent a single bond or a group of -COO-, -OCO-, -CH = CH-COO-, -OCO-CH = CH-, -O-, -S-, -OCOO-, or -CO-; D and E independently represent a single bond or a group of -COO-, -OCO-, -CH = N-, -N = CH, -CH = CH-, -C = C-, -CH = CH-COO-, -OCO-CH = CH-, $-CH_2CH_2-$,$-OCH_2-$, $-CH_2O-$, -COS- or -SCO-;

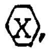, 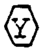 and 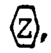,

independently represent a group containing six-membered ring, including benzene ring, cyclohexane ring, bicyclo[2,2,2]octane ring, pyridine ring, pyrimidine ring, pyradine ring, pyridazine ring, piperazine ring, pyrane ring, dioxacyclohexane ring, thiapyrane ring, dithiane ring, thiadiazine ring, tetrazine ring, wherein the hydrogen atoms may be substituted with fluorine atom, chlorine atom, bromine atom, cyanogen group, nitro group, lower alkyl group, lower alkoxyl group or deutrium; $R_7$ and $R_8$ independently represent a linear or branched alkyl group having 1 to 15 carbon atoms, and the alkyl group may contain asymmetric carbon atoms; p is an integer of 1 or 2.]

Representative examples of such optically active compound are illustrated below:

[1] 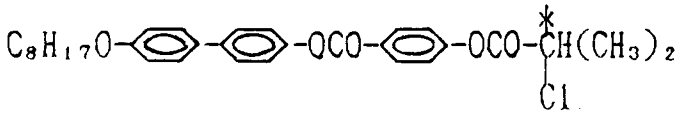

[2] 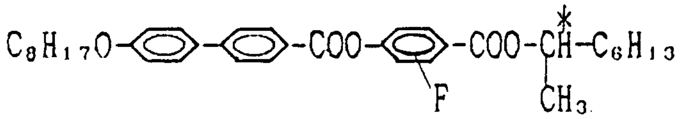

[3] 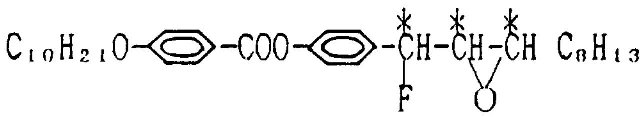

[4] 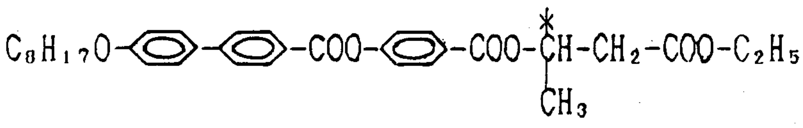

[5] 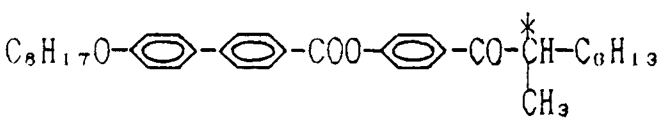

[6] 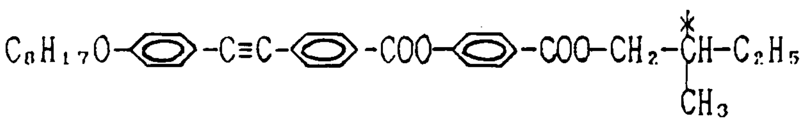

[7] 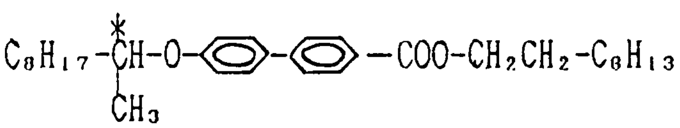

[8] 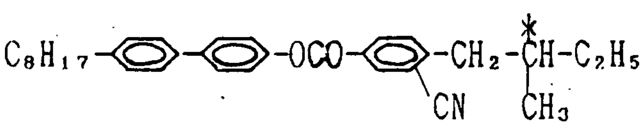

[9] 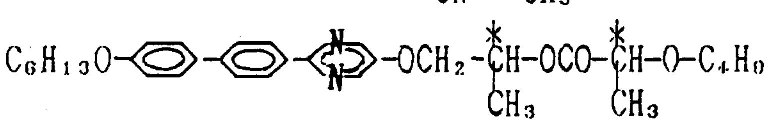

[10] 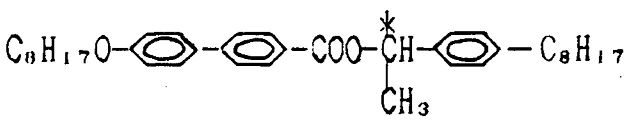

[1] T. Sakurai et. al, Ferroelectrics, 85, 469(1988)
[2] K. Furukawa et. al., Ferroelectrics, 85, 451(1988)
[3] D. M. Walba et. al., J. Am. Chem. Soc., 110, 8686(1988)
[4] K. Yoshino et. al., Jpn. J. Appl. Phys., 26,177 (1987)
[5] Yoshizawa et al., 14th Liquid Crystal Conference, 1B104(1988)

[6] Seto et al., 14th Liquid Crystal Conference, 1B106(1988)
[7] Kodene et al., 14th Liquid Crystal Conference, 1B114(1988)
[8] Kikuchi et al., 14th Liquid Crystal Conference, 1B117(1988)
[9] Miyazawa et al., 14th Liquid Crystal Conference, 1B119(1988)
[10] Koden et al., Japanese Chemical Association, 58th Spring Annual Meeting, 3 H02(1989)

In the ferroelectric liquid crystal composition of the present invention, such an optically active compound may be used singly or in combination of two or more thereof. It is preferred to use an appropriate combination of such compound, so that the combination may exhibit smectic C phase around room temperature and also has phase sequences such as IAC and INAC.

The content of the Compound I in the ferroelectric liquid crystal composition of the present invention is as described above, while the content of the optically active compound is 0.5 to 30% by weight, preferably 2 to 20% by weight in the final liquid crystal composition.

Furthermore, the present invention provides a liquid crystal device using the ferroelectric liquid crystal composition of the present invention between a pair of electrodes. The liquid crystal device may be constructed in a known constitution by using known materials in the art, as they are, except that the ferroelectric liquid crystal composition of the present invention is used as the liquid crystal composition of the device. Such a liquid crystal device may be preferable for a liquid crystal shutter, other than for the use in a liquid crystal display device.

The present invention will now be explained in Examples in detail, but it is not limited to them.

Examples

A. Synthetic Example of Compound

Preparation: [A-1] Synthesis of [A-1] 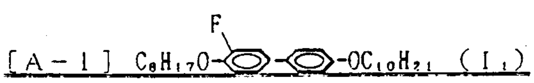 ($I_1$)

Step (A-1-a)

Synthesis of 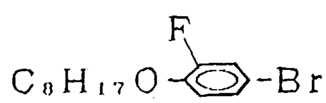

In a reactor, 15 g of 2-fluorophenol, 25.9 g of octylbromide, 46.2 g of potassium carbonate and 150 ml of cyclohexane were placed and stirred at 120-130 °C for 12 hours. The reaction solution was added to dilute hydrochloric acid and extracted into benzene, followed by washing with water, and dehydrated over Glauber's salt. Subsequently, the solvent was distilled off. The residual fraction and 100 ml of chloroform were placed in another reactor, to which was added dropwise 44 g of bromine under stirring at room temperature and further stirred for additional 6 hours at the same temperature. The reaction mixture was added to dilute aqueous sodium hydroxide solution and stirred. The chloroform layer was washed with water and dehydrated over Glauber's salt. The residue after distilling off the solvents was vacuum distilled to obtain 32 g of 3-fluoro-4-octyloxybromobenzene (78.8%).
bp. 122-130 °C/(0.3 mmHg)40 Pa

Step (A-1-b)

Synthesis of 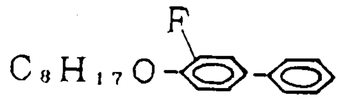

In a reactor were placed 22 g of magnesium, a small amount of iodine and 50 ml of tetrahydrofurane (THF) under nitrogen stream, to which was added an appropriate amount of a solution of 144 g of bromobenzene in 150 ml THF and heated. After initiation of reaction, the remaining THF solution was added dropwise under refluxing and stirring and further stirred for additional 2 hours after completion of addition, to prepare a Grignard reagent.

In another vessel were placed 3.6 g of $Cl_2Pd(PPh_3)_2$ and 100 ml of THF, to which were sequentially added 26 ml of 1M solution of (iso-$C_4H_9$)$_2$AlH/hexane and a solution of 177.3 g of 3-fluoro-4-octyloxybromobenzene obtained in (A-1-a) in 150 ml THF. This mixture was heated, to which was added dropwise the Grignard reagent, previously prepared, at 50-60 °C and then left to stand at the same temperature for two hours. The reaction solution was added to dilute hydrochloric acid and extracted into benzene, followed by washing with water and dehydration over Glauber's salt. Subsequently, the solvent was distilled off. The remaining fraction was recrystallized with a chloroform/hexane mixture solvent and purified by silica gel chromatography (elution solvent; hexane) to obtain 3-fluoro-4-octyloxybiphenyl.

Yield 137.5 g (78.3%)    GLC 98% or more

Step (A-1-c)

Synthesis of 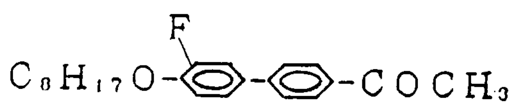

In a reactor were placed 141 g of 3-fluoro-4-octyloxybiphenyl and 400 ml of methylene chloride, to which was gradually added 94 g of anhydrous aluminum chloride at 0 °C or less under stirring and then was added dropwise 56 g of acetylchloride. After completion of dropwise addition, the mixture was stirred for 6 hours while increasing the temperature. The reaction solution was added to dilute hydrochloric acid, and the organic layer was washed with water and dehydrated over Glauber's salt. Subsequently, the solvent was distilled off. The remaining fraction was recrystallized with chloroform, to obtain 3-fluoro-4-octyloxy-4'-acetylbiphenyl.

Yield 154.4 g (95.8%)    GLC 99% or more

Step (A-1-d)

Synthesis of 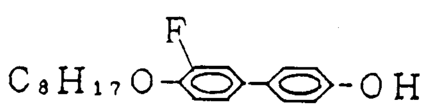

In a reactor were placed 9.15 g of 3-fluoro-4-octyloxy-4'-acetylbiphenyl obtained in (A-1-c), 36 g of 88% formic acid and 90 ml of methylene chloride, to which were sequentially added dropwise under stirring at room temperature, 16 g of acetic anhydride, 1.0 ml of conc. sulfuric acid and 30 ml of 35% aqueous hydrogen peroxide. After completion of dropwise addition, the reaction mixture was stirred, under refluxing, with TLC (Kieselgel 60F254, Developing solution; benzene) until the material disappeared. The reaction solution was added to water and stirred for one hour. Then, the organic layer was washed with water until

washing solution became neutral, and dehydrated over Glauber's salt. After the solvent was distilled off, 70 ml of methanol and 40% aqueous sodium hydroxide solution were added to the remaining fraction and reacted together under stirring at 70 ° C for 3 hours. The reaction solution was added to water and acidified with hydrochloric acid, followed by extraction into ether, washing with water and dehydration over Glauber's salt. After the solvent was distilled off, the remaining fraction was recrystallized with acetone to obtain 3-fluoro-4-octyloxy-4-hydroxybiphenyl.
Yield 5.94 g (70.5%)  GLC 99% or more

Step (A-1-e)

Synthesis of 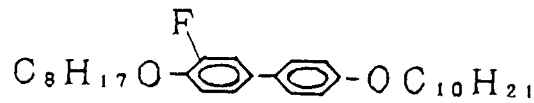

In a reactor were placed 2.00 g of 3-fluoro-4-octyloxy-4′-hydroxybiphenyl obtained in (A-1-d), 1.4 g of decylbromide, 1.8 g of potassium carbonate and 15 ml of cyclohexanone and reacted together at 110-130 ° C for 5 hours. The reaction solution was filtered and the thus obtained solid product was washed with benzene. The washing solution was mixed with the filtrate and washed with water, which was then dehydrated over Glauber's salt.
After the solvent was distilled off, the remaining fraction was recrystallized with acetone to obtain 3-fluoro-4,4′-dioctyloxybiphenyl.
Yield 2.66 g (92.2%)

The purity of the product was determined by HPLC to be 99% or more. It was confirmed that the product was the objective product (Compound $I_1$), based on the finding that a molecular ion peak was observed at 456 by IR and Mass spectral analyses, and the relation of the finding with the materials used.

Preparation [A-2] Synthesis of

[A-2] 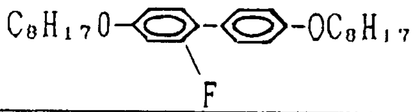 ($I_2$)

Step (A-2-a)

Synthesis of 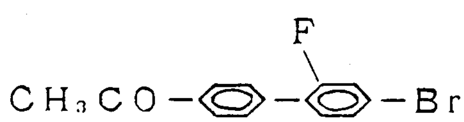

In a reactor were placed 113 g of anhydrous aluminum chloride and 600 ml of methylene chloride, to which was added 113 g of acetylchloride under stirring at 0 ° C or less. Subsequently, a solution of 100 g of 2-fluoro-4-bromobiphenyl in 400 ml methylene chloride was added dropwise, stirred and reacted together for 7 hours while increasing the temperature up to room temperature. After adding the reaction solution to ice/dilute hydrochloric acid, the methylene chloride layer was washed sequentially with water, aqueous sodium hydrogencarbonate solution, and water, followed by dehydration over Glauber's salt and distillation of the solvent. The remaining fraction was recrystallized with acetone to obtain 2-fluoro-4-bromo-4′-acetylbiphenyl.

Yield 96 g (82.2%)    GLC 100% or more

Step (A-2-b)

Synthesis of 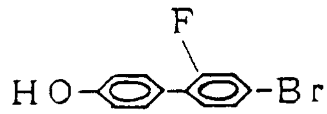

In a reactor were placed 65 g of 2-fluoro-4-bromo-4′-acetylbiphenyl obtained in (A-2-a) and 300 ml of methylene chloride, to which were added dropwise, under stirring at 10 °C, 500 ml of 88% formic acid and 480 ml of acetic anhydride. After 1.5 ml of conc. sulfuric acid was further added dropwise, 150 ml of 35% hydrogen peroxide was added dropwise over three hours. After completion of dropwise addition, the temperature was increased gradually and additional stirring was carried out at 45-50 °C for 30 hours. The reaction solution was added to ice/water and extracted into benzene, followed by washing sequentially with aqueous sodium hydrogencarbonate and water, and dehydrated over Glauber's salt. After the solvent was distilled off, the remaining fraction was obtained. The remaining fraction and 2 l of ethylalcohol were placed in another reactor, to which was added 25% aqueous sodium hydroxide solution and stirred under refluxing for 8 hours. The reaction solution was added to ice/dilute hydrochloric acid, extracted into benzene, washed with water and dehydrated over Glauber's salt. After the solvent was distilled off, the remaining fraction was purified by silica gel chromatography (elution solution; benzene) to obtain 2-fluoro-4-bromo-4′-hydroxybiphenyl.
Yield 28.1 g (47.5%)

Step (A-2-c)

Synthesis of 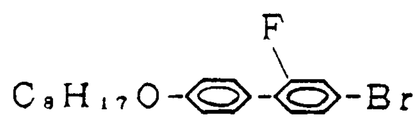

In a reactor, 5 g of 2-fluoro-4-bromo-4′-hydroxybiphenyl obtained in (A-2-b), 8.63 g of octylbromide, 4 g of potassium carbonate and 50 ml of 2-butanone (MEK) were placed, and reacted together under stirring and refluxing for 8 hours. The reaction solution was then added to dilute hydrochloric acid and extracted into benzene, followed by washing with water and dehydration over Glauber's salt. Subsequently, the solvent was distilled off. The residual fraction was recrystallized in an acetone/methanol mixture solvent to obtain 6.45 g of 2-fluoro-4-bromo-4′-octyloxybiphenyl (90.8%).
Yield 6.45 g (90.8%)    TLC monospot

Step (A-2-d)

Synthesis of 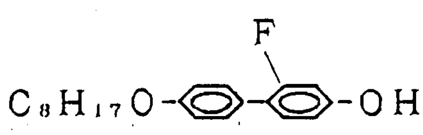

In a reactor were placed 8.6 g of magnesium and a small amount of iodine, to which was added a small amount of a solution of 135 g of 2-fluoro-4-bromo-4′-octyloxybiphenyl obtained in (A-2-c) in 200 ml THF and heated. After initiation of reaction, the remaining THF solution was added dropwise. After completion of dropwise addition, the reaction mixture was refluxed for 3 hours to prepare a Grignard reagent. In another vessel was placed 68 g of boric acid tributylester, to which was added dropwise at 40 °C the Grignard

reagent previously prepared and then stirred at the same temperature for additional one hour. After leaving the reaction mixture to stand for cooling, 10% aqueous sulfuric acid was added dropwise under stirring, and then 50 ml of benzene was added to the resulting solution for extraction. In another reactor, the benzene extraction was placed and 72 ml of 20% aqueous hydrogen peroxide was added dropwise under stirring at 40-50 °C, followed by stirring for additional 2 hours. The reaction solution was added to water, and the benzene layer was treated with aqueous sodium hydrogen-sulfite solution, followed by washing with water and dehydration over Glauber's salt. After the solvent was distilled off, the remaining fraction was purified by silica gel chromatography (elution solvent; hexane benzene ) to obtain 2-fluoro-4-hydroxy-4′-actyloxybiphenyl.

Yield 84.5 g (75.5%)

Step (A-2-e)

Synthesis of 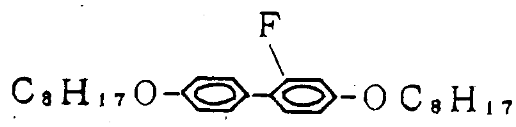

In a reactor were placed 5.0 g of 2-fluoro-4-hydroxy-4′-octyloxyphenyl obtained in (A-2-b), 3.1 g of octylbromide, 4.4 g of potassium carbonate, and 35 ml of cyclohexanone, and reacted together at 110-130 °C for 5 hours. After filtering the reaction solution, the solid product was washed with benzene. The washing solution was mixed with the filtrate, washed with water and dehydrated over Glauber's salt. After the solvent was distilled off, the remaining solution was recrystallized with acetone to obtain 2-fluoro-4,4′-dioctyloxybihenyl.

Yield 6.46 g (95.5%)

The purity of the product was determined by HPLC to be 99% or more. It was confirmed that the product was the objective product (Compound $I_2$), based on the finding that a molecular ion peak was observed at 428 by IR and Mass spectral analyses, and the relation of the finding with the materials used.

Synthesis of 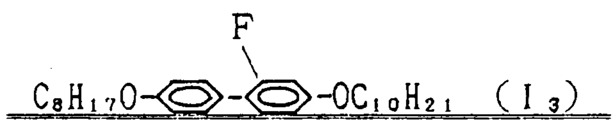 ($I_3$)

The same procedure as in (A-2-e) of [A-2] was performed except that 3.5 g of decylbromide was used instead of 3.1 g of octylbromide, to obtain 2-fluoro-4-decyloxy-4′-octyloxybihenyl.

Yield 6.86 g (95.2%)

The purity of the product was determined by HPLC to be 99% or more. It was confirmed that the product was the objective product (Compound $I_3$), based on the finding that a molecular ion peak was observed at 428 by IR and Mass spectral analyses, and the relation of the finding with the materials used.

Preparation [A-4] Synthesis of 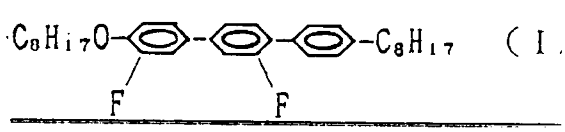 ( I

Step (A-4-a)

Synthesis of 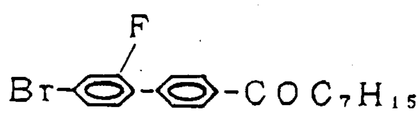

In a reactor were placed 20 ml of methylene chloride and 3.2 g of anhydrous aluminum chloride, to which was added 4 g of octanoylchloride under stirring at -5 ° C or less. Subsequently, a solution of 3 g of 4-bromo-2-fluorobiphenyl in 10 ml methylene chloride was added dropwise.

After completion of dropwise addition, reaction was effected under stirring at 0 ° C or less for 3 hours and the reaction solution was left to stand overnight at room temperature. The reaction solution was added to ice/dilute hydrochloric acid, and extracted into benzene. The benzene solution was washed with water and treated with dilute aqueous ammonia, followed sequentially by washing with water and dehydration over Glauber's salt. The residue, after benzene was distilled off, was recrystallized with acetone to obtain 3.8 g of 4-octanoyl-2'-fluoro-4'-bromobiphenyl (84.2%).
TLC monospot

Step (A-4-b)

Synthesis of 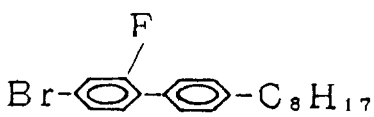

In a reactor were placed 3.75 g of 4-octanoyl-2'-fluoro-4'-bromobiphenyl and 20 ml of trifluroacetic acid, to which was added 2.4 g of triethylsilane at room temperature and stirred for 6 hours. Then, the reaction solution was added into water, extracted into benzene, washed sequentially with water, aqueous sodium hydrogencarbonate, and again water, and dehydrated over Glauber's salt. After the solvent was distilled off, the residue was evaporated in a glass tube oven (GTO) to obtain 2.56 g of 4-octyl-2'-fluoro-4'-bromobiphenyl (71.1%).
Preset temperature of GTO 150 ° C/(0.2 mmHg) 26.7 Pa
TLC monospot

Step (A-4-c)

Synthesis of 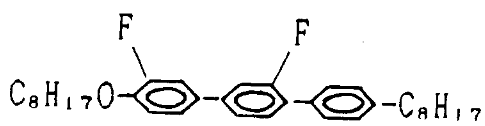

In a reactor were placed 0.4 g of magnesium powder and a small amount of iodine, to which was added a small amount of a solution of 3.6 g of 4-octyloxy-3-fluorobromobenzene in 20 ml THF and reacted together. The remaining THF solution was then added dropwise under stirring and refluxing, and stirred under refluxing for additional 2 hours to prepare a Grignard reagent.

In another vessel were sequentially placed, under nitrogen stream, 0.1 g of dichlorobistriphenylphosphine palladium [$Cl_2Pd(PPh_3)_2$], 200 ml of THF, 0.5 ml of 1M hexane solution of di-isobutylaluminium hydride [$(iso\text{-}C_4H_9)_2AlH$] and a solution of 2.2 g of 4-octyl-2′-fluoro-4′-bromobiphenyl obtained above in (A-4-b) in 20 ml THF. The Grignard reagent previously prepared was subsequently added under stirring at 50 ° C and stirred for 6 hours at the same temperature. The reaction solution was added to dilute hydrochloric acid and extracted into benzene, followed by washing with saline and dehydration over Glauber's salt. After the solvent was distilled off, the remaining fraction was purified by silica gel

chromatography (elution solvent; hexane:benzene = 6:1) and recrystallized with acetone to obtain 1.0g of 4-octyloxy-3,3′-difluoro-4″-octyl-p-terphenyl (32.6%).

The purity of the product was determined by HPLC to be 99% or more. It was confirmed that the product was the objective product (Compound $I_4$), based on the finding that a molecular ion peak was observed at 506 by IR and Mass spectral analyses, and the relation of the finding with the materials used.

Examples 1-6, Comparative Examples 1-3

Liquid crystal compositions shown in Table 3 were prepared, by using the compounds shown in Table 1 and the compositions shown in Table 2. Phase transition temperature is shown in Table 3.

The liquid crystal compositions of the present embodiment, shown in Example 1, contain Compound I and pyrimidine compound II , whereby they are superior to the liquid crystal composition of Comparative Example 1, consisting of pyrimidine compound II alone, in terms of crystallization temperature at lower temperature.

The liquid crystal compositions of the present embodiment, shown in Example 2, contain Compound I , pyrimidine compound II, and ester compound III, whereby they are superior to the liquid crystal composition of Comparative Example 1, consisting of pyrimidine compound II alone, in terms of crystallization temperature at lower temperature and upper temperature limit of smectic C phase.

The liquid crystal compositions of the present invention, shown in Examples 3 and 4, contain Compound I, pyrimidine compound II and ester compound III, whereby they are superior to the liquid crystal compositions of Comparative Examples 1 and 2, both compositions consisting of pyrimidine compound II alone, in terms of crystallization temperature at lower temperature and upper temperature limit of smectic C phase.

The liquid crystal compositions of the present invention, shown in Examples 5 and 6, contain Compound , pyrimidine compound II and ester compound III, whereby they are superior to the liquid crystal composition of Comparative Example 3, consisting of pyrimidine compound II and ester compound III, in terms of crystallization temperature at lower temperature.

Table 1

| Compound (Comp.) | Structure | Phase Transition (°C) | | | | |
|---|---|---|---|---|---|---|
| | | C | Sc | SA | N | I |
| Comp. $I_1$ | 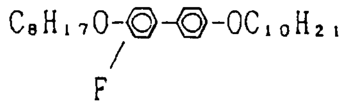 | · 81 | (· 79) | · 86 | - | · |
| Comp. $I_2$ | 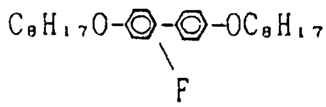 | · 36 | · 54 | - | · 65 | · |
| Comp. $I_3$ | 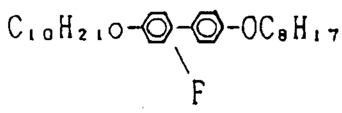 | · 51 | (· 40) | - | · 63 | · |
| Comp. $I_4$ | 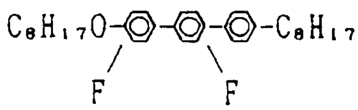 | · 60 | · 109 | · 128 | - | · |
| Comp. $II_1$ | 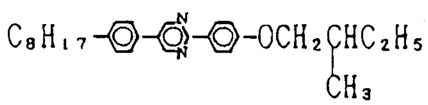 | · 91 | · 155 | · 169 | - | · |
| Comp. $II_2$ | 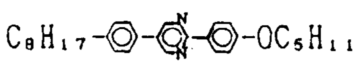 | · 73 | · 114 | · 203 | - | · |
| Comp. $III_1$ | 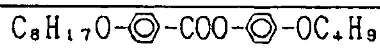 | · 58 | · 60 | - | · 89 | · |
| Comp. $III_2$ | 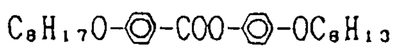 | · 55 | · 66 | - | · 90 | · |
| Comp. $III_3$ | 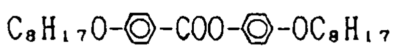 | · 61 | · 73 | - | · 90 | · |
| Comp. $III_4$ | 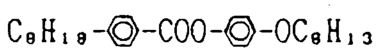 | · 41 | (· 37) | - | · 64 | · |
| Comp. $III_5$ | 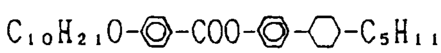 | · 73 | · 120 | · 127 | · 170 | · |
| Comp. $III_6$ | 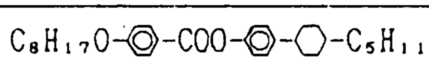 | · 82 | · 100 | - | · 183 | · |
| Comp. $III_7$ | 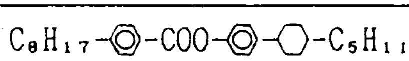 | · 59 | - | - | · 158 | · |
| Comp. $III_8$ | 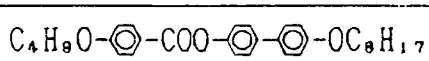 | · 139 | (· 129) | - | · 209 | · |

Table 2

| $C_nH_{2n+1}$-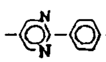-$OC_mH_{2m+1}$ (=PYPnOm) Composition (wt%) | | | | | | | | | | | | Phase transition (°C) |
|---|---|---|---|---|---|---|---|---|---|---|---|---|
| nOm= | 707 | 708 | 709 | 806 | 808 | 809 | 8010 | 906 | 908 | 909 | 9011 | C $S_C$ $S_A$ N I |
| Comp. $II_{C1}$ | 5 | 10 | 15 | | 20 | | 30 | 20 | | | | ·< 5 · 51 · 63 · 69 · |
| Comp. $II_{C2}$ | | | 9 | 8 | 15 | | 15 | 10 | 14 | 14 | 15 | ·< 5 · 55 · 68 · 71 · |
| Comp. $II_{C3}$ | | | 10 | 6 | | 14 | 21 | 11 | 20 | 19 | | < 5 · 55 · 68 · 71 · |
| Comp. $II_{C4}$ | | | 10 | 5 | | 20 | 20 | 5 | 20 | 20 | | < 5 · 57 · 69 · 71 · |

Comp. (=Composition)

Table 3

| | Examples | | | | | | Comparative Examples | | |
|---|---|---|---|---|---|---|---|---|---|
| | 1 | 2 | 3 | 4 | 5 | 6 | 1 | 2 | 3 |
| Composition | | | | | | | | | |
| Comp. $I_1$ | 5 | 4 | | | | | | | |
| Comp. $I_2$ | 10 | 4 | 5 | 4 | 9 | 8 | | | |
| Comp. $I_3$ | 16 | 4 | 5 | 4 | | | | | |
| Comp. $I_4$ | | 5 | | | | | | | |
| Comp. $II_1$ | | 6 | 7 | 6 | 9 | 8 | | | 7 |
| Comp. $II_2$ | | 5 | 13 | 12 | 10 | 9 | | | 7 |
| Comp. $III_1$ | | | | 4 | | 6 | | | |
| Comp. $III_2$ | | | | 4 | | 4 | | | |
| Comp. $III_3$ | | | | | | | | | 6 |
| Comp. $III_4$ | | | | | | | | | 4 |
| Comp. $III_5$ | | 5 | | | 6 | 5 | | | 4 |
| Comp. $III_6$ | | 5 | | | 5 | 5 | | | 4 |
| Comp. $III_7$ | | | 4 | 4 | | | | | |
| Comp. $III_8$ | | | 4 | 3 | | | | | |
| Comp. $II_{C1}$ | 69 | | | | | | 100 | | |
| Comp. $II_{C1}$ | | 62 | | | | | | | 60 |
| Comp. $II_{C3}$ | | | | | 61 | 55 | | 100 | |
| Comp. $II_{C4}$ | | | 62 | 59 | | | | | |
| Transition | | | | | | | | | |
| $C \rightarrow S_C$ | < 0 | <- 5 | <- 5 | <-10 | <-10 | <-15 | < 5 | < 5 | <- 5 |
| $S_C \rightarrow S_A$ | 52 | 65 | 65 | 62 | 63 | 60 | 51 | 55 | 62 |
| $S_A \rightarrow N$ or I | 60 | 83 | 84 | 82 | 85 | 81 | 63 | 68 | 83 |
| $N \rightarrow I$ | 67 | 87 | - | 87 | 89 | 90 | 69 | 71 | 87 |

Example 7

A ferroelectric liquid crystal composition shown below in Table 4 was prepared, using Compounds I , II and III.

The ferroelectric liquid crystal composition exhibited smectic C phase at room temperature and their phase transition was as shown below:

$$S_C \xrightarrow{48^\circ C} S_A \xrightarrow{67^\circ C} N \xrightarrow{76^\circ C} I$$

[wherein $S_C$, $S_A$, N and I represent smectic C phase, smectic A phase, nematic phase and isotropic liquid, respectively].

Ferroelectric liquid crystal devices using the liquid crystal composition prepared above will now be explained.

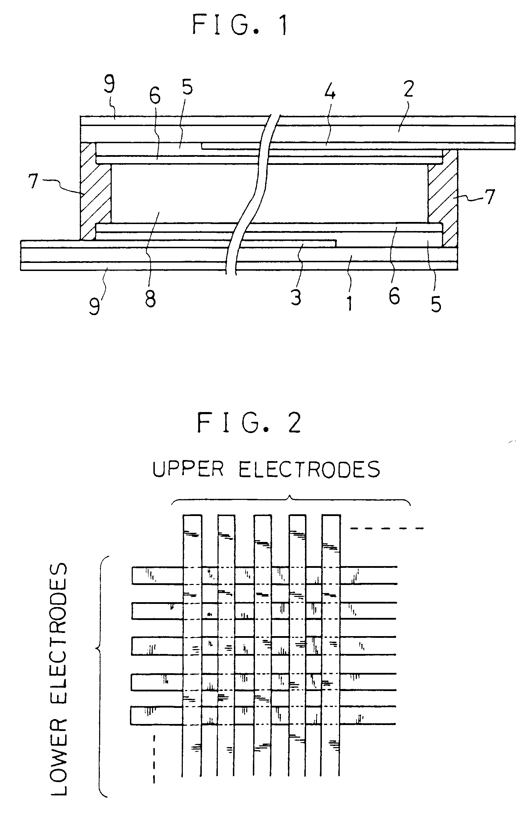

Fig.1 is a sectional view illustrating a constitution of a liquid crystal devices using the ferroelectric liquid crystal composition of the present invention.

Fig.1 is an example of transmission type display device, where 1 and 2 are insulating substrates; 3 and 4 are conductive films; 5 is an insulating film; 6 is an orientation-controlled layer; 7 is a sealant; 8 is a ferroelectric liquid crystal; and 9 is a deflector plate.

Phototransmission substrates are used for the insulating substrates 1 and 2, and generally glass substrates are employed. Clear ceramic substrates are also used therefor.

Clear electrodes 3 and 4, which are composed of conductive thin films comprising $In_2O_3$, $SnO_2$, ITO-(Indium-Tin Oxide), individually, and have predetermined patterns, are formed on the the insulating substrates 1 and 2.

On the substrates is formed an insulating film 5, but the film 5 may be omitted in some cases. As the insulating film 5, there may be used, for example, inorganic thin film such as $SiO_2$, $SiN_x$, $Al_2O_3$, etc., and organic thin film such as polyimide, acrylic resin, pho toresist resin, polymer liquid crystal, etc.. In case that the insulating film 5 is composed of inorganic thin film, the film 5 may be formed by deposition process, sputtering process, CVD (Chemical Vapor Deposition) process or solution coating process. In case that the insulating film 5 is composed of organic thin film, the film 5 may be formed by using a solution dissolving an organic substance or a solution of its precursor according to spin-coating process, immersion application process, screen printing process, roller application process and curing it at predetermined conditions (heating, photoirradiation, etc.); the thin film may be formed also by LB (Langumuir-Blodgett) process as well as deposition process, sputtering process, CVD process.

On the insulating film is formed an orientation-controlled layer 6. In case that the insulating film 5 is omitted, however, the orientation-controlled layer 6 may be formed directly on the conductive films 3 and 4. As the orientation-controlled layer 6, inorganic layer may be used in some cases, while organic layer may be also used in other cases.

In case that an inorganic orientation-controlled layer is used, slant deposition of silicone oxide is commonly used. Rotation depositioning may be also used. In case that an organic orientation-controlled layer is used, nylon, polyvinylalcohol, polyimide and the like may be used. Generally, rubbing is effected on the layer. Orientation by using polymer liquid crystal or LB membrane, orientation by magnetic field, orientation by spacer edge process may be also carried out. $SiO_2$, $SiN_X$ and the like may be formed by deposition process, sputtering process, CVD process and the like, on which rubbing may be effected.

The two insulating substrates are laminated together, and then liquid crystal is injected between them to produce a ferroelectric liquid crystal device.

The ferroelectric liquid crystal device of the present invention is explained as a switching element with one pixel, in Fig.1. The ferroelectric liquid crystal and liquid crystal device of the present invention may be also applied to a display device with a large capacity matrix, wherein the wiring on the upper substrate together with the wiring on the lower substrate is formed into a matrix type for use, as is shown in a plane schematic view of Fig.2. Such matrix-type liquid crystal device may be driven by various driving methods which have been proposed currently [see for example, Wakita, Kamimura, Onishi, Oniwa, Kobayashi, Ota, National Technical report,33, 44 (1987)].

In the liquid crystal device explained above, an ITO film was formed on two glass substrates, on which $SiO_2$ film was formed. Subsequently, PVA film was applied thereon for rubbing.

Then, the two glass substrates were laminated together with a cell thickness of 2 um, between which was injected a ferroelectric liquid crystal composition prepared. After injection, the cell was temporarily heated up to 90 °C where the liquid crystal composition was changed into isotropic liquid and then cooled

down to room temperature with a rate of 1 ° C/min, to obtain a ferroelectric liquid crystal element in excellent orientation.

The ferroelectric liquid crystal device was arranged between two polarizers being orthogonal to each other, and a rectangular wave of $V_{p-p}$ = 20V was applied subsequently. There was observed a change in the intensity of transmission light. The response speed determined by the change in the intensity of transmission light was 308 µsec at 25 ° C, while the tilt angle was 20 °.

Comparative Example 4

The ferroelectric liquid crystal composition with a composition shown in Table 4 was prepared, by substituting Compound I in Example 1 with ester compound. The phase transition of the ferroelectric liquid crystal composition was as follows:

$$S_C \xrightarrow{48^\circ C} S_A \xrightarrow{68^\circ C} N \xrightarrow{72^\circ C} I$$

A ferroelectric liquid crystal device similar to the device in Example 1 was prepared. The ferroelectric liquid crystal device was arranged between two polarizers being orthogonal to each other, and a rectangular wave of $V_{p-p}$ = 20V was applied subsequently thereto. There was observed a change in the intensity of transmission light. The response speed determined by the change in the intensity of transmission light was 367 µsec at 25 ° C, while the tilt angle was 16 °.

Table 4

| Compounds | Composition (wt%) Example 7 | Composition (wt%) Compara. Exam. 4 |
|---|---|---|
| 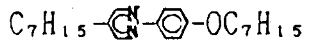 | 7 | 7 |
| 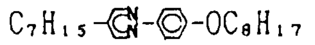 | 4 | 4 |
| 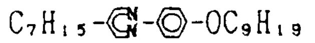 | 10 | 10 |
| 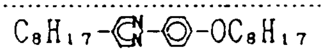 | 15 | 15 |
| 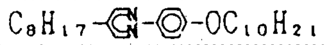 | 22 | 22 |
| 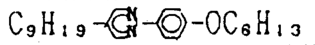 | 12 | 12 |
| 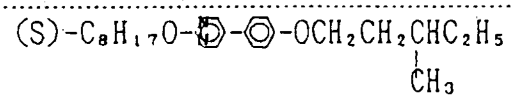 | 4 | 4 |
| 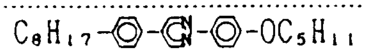 | 4 | 4 |
| 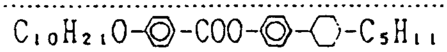 | 3 | 3 |
| 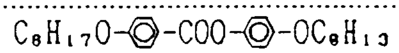 | | 4 |
| 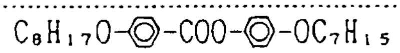 | | 5 |
| 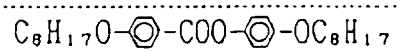 | | 5 |
| 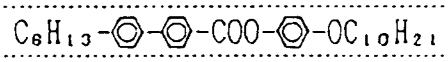 | | 3 |
| 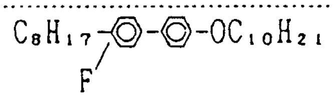 | 3 | |
| 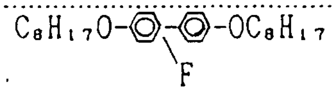 | 8 | |
| 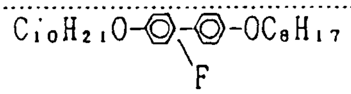 | 4 | |
| 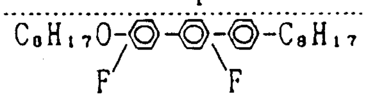 | 2 | |
| 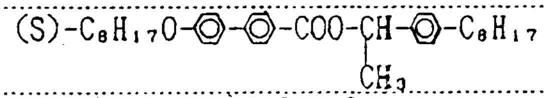 | 2 | 2 |
| Phase transition temperature (°C) $S_C \to S_A$ | 48 | 48 |
| Phase transition temperature (°C) $S_A \to N$ | 67 | 68 |
| Phase transition temperature (°C) $N \to I$ | 76 | 72 |
| Response rate (usec) | 308 | 367 |
| Tilt angle θ (deg) | 20 | 16 |

Comparison of Example 7 with Comparative Example 4 demonstrates that the liquid crystal composition of the present invention is superior in terms of response speed and tilt angle.

As are demonstrated in Examples, the liquid crystal composition of the present invention is superior to conventional liquid crystal compositions, regarding the temperature range of smectic C phase and response characteristics. By using the liquid crystal composition, there may be provided a ferroelectric liquid crystal

device with a larger capacity, which has a good orientation property, brightness due to high contrast, and a wide range of operable temperature.

## Claims

**1.** A ferroelectric liquid crystal composition, comprising at least one compound represented by the following general formula (I):

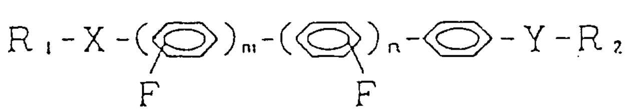

······( I )

[wherein $R_1$ and $R_2$ independently represent a straight chain alkyl group having 8 to 15 carbon atoms; X and Y independently represent a single bond, or a group of -O-, -COO-, or -OCO-; n and m independently represent 0 or 1 provided that at least one of n and m is 1] in a content of 1 to 40 % by weight and at least one compound represented by the following general formula (II):

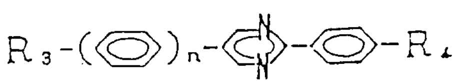

······( II )

[wherein $R_3$ and $R_4$ independently represent an alkyl group or an alkoxyl group, having 1 to 15 carbon atoms; and n represents 0 or 1] in a content of 99 to 60 % by weight, and further comprising an optically active compound.

**2.** The liquid crystal composition of claim 1 in which the contents of the compounds represented by the formulas (I) and (II) are 5 to 20 % by weight and 95 to 80 % by weight, respectively.

**3.** The liquid crystal composition of claim 1 further comprising at least one compound represented by the following general fomula (III):

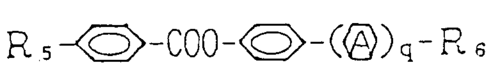

······( III )

[wherein

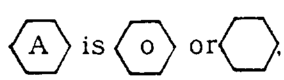
is
or

$R_5$ and $R_6$ independently represent an alkyl group or an alkoxyl group, having 1 to 15 carbon atoms; q represents 0, 1 or 2], wherein the contents of the compounds represented by the formulas (I), (II) and (III) are 1 to 40% by weight, 30 to 90% by weight and 3 to 30% by weight, respectively.

**4.** The liquid crystal composition of claim 3 in which the contents of the compounds represented by the formulas (I), (II) and (III) are 5 to 20 % by weight, 65 to 90 % by weight and 5 to 15 % by weight, respectively.

**5.** A liquid crystal device interposing a liquid crystal composition layer between a pair of electrodes, the liquid crystal composition layer comprising the ferroelectric liquid crystal composition as defined in claim 1.

## Patentansprüche

1. Ferroelektrische Flüssigkristallzusammensetzung, umfassend mindestens eine Verbindung der folgenden allgemeinen Formel (I):

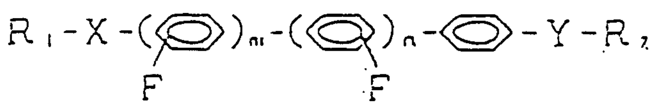

...... ( I )

(worin $R_1$ und $R_2$ unabhängig voneinander eine geradkettige Alkylgruppe mit 8 bis 15 Kohlenstoffatomen bedeuten: X und Y unabhängig voneinander eine Einfachbindung oder eine Gruppe aus -O-, -COO- oder -OCO- bedeuten: n und m unabhängig voneinander O oder 1 bedeuten, mit der Maßgabe, das mindestens eines von n und m 1 ist) in einem Gehalt von 1 bis 40 Gew.-% und mindestens eine Verbindung der folgenden allgemeinen Formel (II):

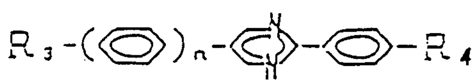

...... ( II )

(worin $R_3$ und $R_4$ unabhängig voneinander eine Alkylgruppe oder eine Alkoxylgruppe mit 1 bis 15 Kohlenstoffatomen bedeuten; und n 0 oder 1 bedeutet) in einem Gehalt vom 99 bis 60 Gew.-%, und umfassend weiterhin eine optisch aktive Verbindung.

2. Flüssigkristallzusammensetzung nach Anspruch 1, wobei die Gehalte der durch die Formeln (I) und (II) angegebenen Verbindungen 5 bis 20 Gew.-% bzw. 95 bis 80 Gew.-% betragen.

3. Flüssigkristallzusammensetzung nach Anspruch 1, umfassend weiterhin mindestens eine Verbindung der folgenden allgemeinen Formel (III)

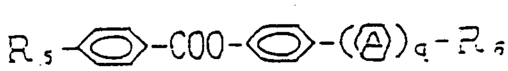

...... ( III )

(worin

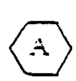 die Bedeutung 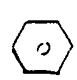 oder 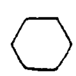

hat, $R_5$ und $R_6$ unabhängig voneinander eine Alkylgruppe oder eine Alkoxylgruppe mit 1 bis 15 Kohlenstoffatomen bedeuten; q 0, 1 oder 2 bedeutet), wobei die Gehalte der durch die Formeln (I), (II) und (III) angegebenen Verbindungen 1 bis 40 Gew.-%, 30 bis 90 Gew.-%, bzw. 3 bis 30 Gew.-% betragen.

4. Flüssigkristallzusammensetzung nach Anspruch 3, wobei die Gehalte der durch die Formeln (I), (II) und (III) angegebenen Verbindungen 5 bis 20 Gew.-%, 65 bis 90 Gew.-% bzw. 5 bis 15 Gew.-% betragen.

5. Flüssigkristallvorrichtung, bei der eine Schicht aus einer Flüssigkristallzusammensetzung zwischen einem Paar von Elektroden eingefügt ist, wobei die Schicht der Flüssigkristallzusammensetzung die in Anspruch 1 definierte, ferroelektrische Flüssigkristallzusammensetzung umfaßt.

## Revendications

**1.** Composition de cristaux liquides ferroélectriques, comprenant au moins un composé représenté par la formule générale suivante (I) :

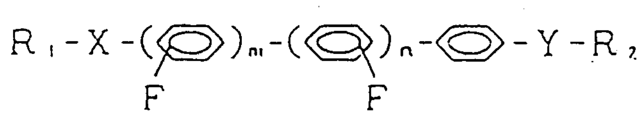

...... ( I )

[dans laquelle :

- $R_1$ et $R_2$ représentent indépendamment un groupe alkyle à chaîne droite, ayant 8 à 15 atomes de carbone ;
- X et Y représentent indépendamment une simple liaison, ou un groupe choisi parmi -O-, -COO-, ou -OCO- ;
- n et m représentent indépendamment 0 ou 1, à la condition qu'au moins l'un parmi n et m soit égal à 1]

dans une teneur de 1 à 40% en poids ; et
au moins un composé représenté par la formule générale suivante (II) :

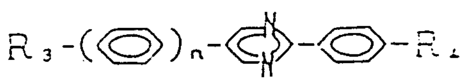

...... ( II )

[dans laquelle :

- $R_3$ et $R_4$ représentent indépendamment un groupe alkyle ou un groupe alcoxyle, ayant 1 à 15 atomes de carbone ; et
- n représente 0 ou 1]

dans une teneur de 99 à 60% en poids,
et comprenant en outre un composé optiquement actif.

**2.** Composition de cristaux liquides selon la revendication 1, dans laquelle les teneurs en composés représentés par les formules (I) et (II) sont respectivement de 5 à 20% en poids et de 95 à 80% en poids.

**3.** Composition de cristaux liquides selon la revendication 1, comprenant en outre au moins un composé représenté par la formule générale suivante (III) :

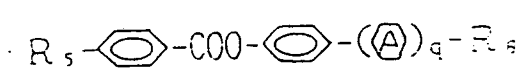

...... ( III )

[dans laquelle :

- 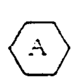 **représente** 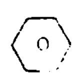 **ou** 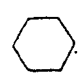 **;**
- $R_5$ et $R_6$ représentent indépendamment un groupe alkyle ou un groupe alcoxyle, ayant 1 à 15 atomes de carbone ;
- q représente 0, 1 ou 2],

dans laquelle les teneurs en composés représentés par les formules (I), (II) et (III) sont respectivement de 1 à 40% en poids, de 30 à 90% en poids, et de 3 à 30% en poids.

4. Composition de cristaux liquides selon la revendication 3, dans laquelle les teneurs en composés représentés par les formules (I), (II) et (III) sont respectivement de 5 à 20% en poids, de 65 à 90% en poids, et de 5 à 15% en poids.

5. Dispositif à cristaux liquides, dans lequel une couche de composition de cristaux liquides est interposée entre deux d'électrodes, la couche de composition de cristaux liquides comprenant la composition de cristaux liquides ferroélectriques telle que définie à la revendication 1.

FIG. 1

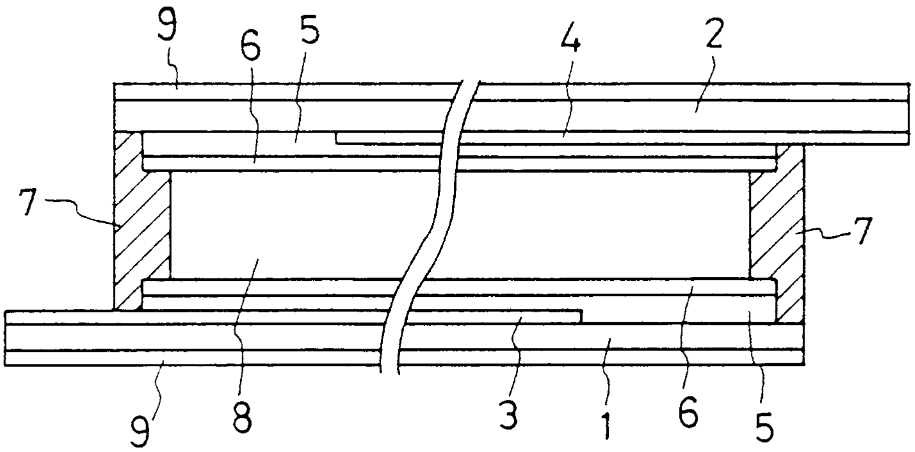


FIG. 2